# EUROPEAN PATENT SPECIFICATION

(11) **EP 1 760 434 B1**
(45) Date of publication and mention of the grant of the patent: **17.12.2008**
(21) Application number: 06016384.7
(22) Date of filing: 05.08.2006
(51) Int. Cl.: G01D 5/244

(54) **Encoder signal processing circuit**
Signalverarbeitungsschaltung für einen Kodierer
Circuit de traitement de signal d'un codeur

(30) Priority: 30.08.2005 JP 2005249747
(43) Date of publication of application: 07.03.2007
(73) Proprietor: Dr. Johannes Heidenhain GmbH, 83301 Traunreut (DE)
(72) Inventor: Masaki, Yoshihisa, Sagamihara-shi Kanagawa-Ken 229-0032 (JP)

(56) References cited:
- US-A- 4 559 524
- US-A- 5 068 529
- US-A- 5 742 136

## Description

The present invention relates to encoder signal processing circuits that process signals that are outputted from detectors that detect the rotation of encoders that are attached to rotating bodies in motors and the like, as well as to linearly moving measured objects, and that detect displacement, that is, number of rotations and/or angle of rotation, as well as traveling position, of measured objects.

United States Patent US5,742,136 describes a linear motor drive system comprising a linear optical encoder. In the encoder the photodiodes of a photodiode array are scanned sequentially by switches. The output signal of the switches is converted to a phase modulated signal that is used to detect the position of a slider of the motor. An encoder like this is very complex and therefore expensive.

The configuration shown in Figure 10, and so on, of Unexamined Japanese Patent Application Publication JP2002-090183, is known as an example of a conventional encoder signal processing circuit. Figure 10 of this reference document shows a block diagram, abstracting the basic constituent parts for the purpose of counting the number of rotations of a rotary encoder. Other essential functions of the encoder are herein omitted.

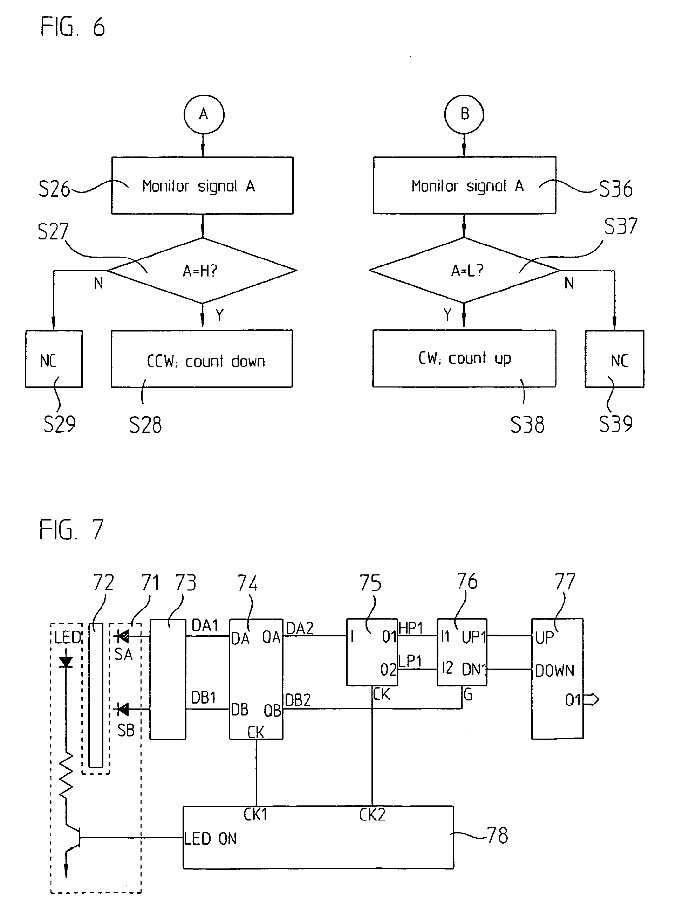

Figure 10 from the aforementioned reference literature is shown as Figure 7 in the present specification. The encoder in Figure 7 comprises detection means 71, for detecting positional information from a code disc; a code disc 72, which comprises the aforementioned positional information; waveform shaping means 73, which shape waveforms of positional data signals from the code disc that are detected by the aforementioned detection means; data processing means 74, which process positional data signals that are obtained from the waveform shaping means 73, and synchronize them to a predetermined clock; edge detection means 75, which detect the rising (HP1) and falling (LP1) edges of data signals that are outputted from these data processing means 74; selection means 76, which carry out selection processing of rising signals (HP1) and falling signals (LP1) outputted from the edge detection means 75, and generate up count signals (UP) and down count signals (DOWN); counting means 77, which count up or count down, according to whether the aforementioned up count signals (UP) or down count signals (DOWN) are inputted; timing generation means 78, which provide selection timing for the aforementioned detection means, and supply a clock for the purpose of synchronization with data processing means 74 and edge detection means 75.

When the code disc of an encoder thus constituted rotates, pulse signals, which are positional data signals corresponding to a slit in the code disc 72, according to the detection speed thereof, are emitted toward photo sensors SA and SB, respectively. The waveform shaping means 73 remove noise and the like from these pulse signals, and shape them into generally rectangular shaped pulse waveforms DA1 and DB1, which can be inputted to a logic circuit.

These shaped positional data signals DA1 and DB1 are inputted to data processing means 74, which operate to synchronize them with the slit detection timing signals. These data processing means 74 sample data signals according to a clock CK1, which is synchronized with the operation of detection means 71, which detect the slit, and maintain the input status of data signals DA1 and DB1, respectively.

DA2, one of the positional data signals that has been processed by the data processing means 74, is inputted to edge detection means 75. These edge detection means 75 detect the rising (HP1) and falling (LP1) edges of signals that are inputted, and output signals HP1 and LP1, corresponding to these. The output of edge detection means 75 is inputted to the selection means 76. DB2, the other signal that is outputted from the data processing means 74, is inputted to the selection means 76, and the rotational direction of the encoder is determined from the output from the aforementioned edge detection means 75. For each rotation, there is one pulse of UP output or DOWN output, corresponding to rotational direction CW (clockwise) or CCW (counterclockwise).

In the present example, there is a 90° phase difference between the phases of positional data signals DA1 and DA2, which are outputted according to rotational direction. The sequence of the positional data signals DA1 and DA2 can be ascertained based on the aforementioned rising (HP1) and falling (LP1) signals and rotational direction can be determined thereby.

Hence, the slit in the code disc 72 is detected on a predetermined cycle, according to the timing signal that is supplied by the timing generation means 78, as a positional detection signal, and this is changed into an UP or DOWN signal, depending on the phase relationship of the two signals. The number of rotations is counted by the counting means 77.

However, the waveform shaping means 73 require a number of waveform shaping circuits corresponding to the detectors constituting the detection means 71, and if the number of detectors is increased, the number of waveform shaping circuits must also be increased. It has also been necessary to greatly reduce the number of parts in recent years, in response to the demand for miniaturization, but the presence of a multiplicity of waveform shaping circuits, duplicating similar functions, is a disadvantage in this case. Reducing the number of circuits and other parts is also desirable from the standpoint of increased reliability and reduced energy consumption.

The object of the present invention is to provide a small, compact, low-cost, highly reliable encoder by simplifying the circuit constitution and reducing the number of parts.

This object is accomplished by an encoder signal processing circuit with the features of claim 1. Further advantages of the present invention result from the claims dependent from claim 1.

In an example embodiment the encoder signal processing circuit comprises a plurality of detectors that generate signals with different phases, a switching circuit that alternatively selects and outputs a signal from this plurality of detectors, and a waveform shaping circuit that shapes waveforms of output signals from the detector switched by this switching circuit.

The encoder signal processing circuit may further comprise a direction determining/counting unit that monitors output signals from the waveform shaping circuit in relation to the operation of the switching circuit, determines the direction of movement and computes the amount of movement.

These and other features and advantages of the present invention will be appreciated as the same becomes better understood by reference to the following detailed description when considered in connection with the accompanying drawings.
- Figure 1: is a block diagram showing the basic constitution of an encoder signal processing circuit of the present invention.
- Figure 2: is a block diagram showing a first embodiment of the encoder signal processing circuit of the present invention.
- Figure 3: is a block diagram showing a second embodiment of the encoder signal processing circuit of the present invention.
- Figure 4: is a timing chart of signal A and signal B, which have been outputted from a waveform shaping circuit.
- Figure 5: is a flowchart showing the operation of the direction determining and counting part.
- Figure 6: is a flowchart showing the operation of the direction determining and counting part.
- Figure 7: is a block diagram showing the basic constitution of a conventional encoder.

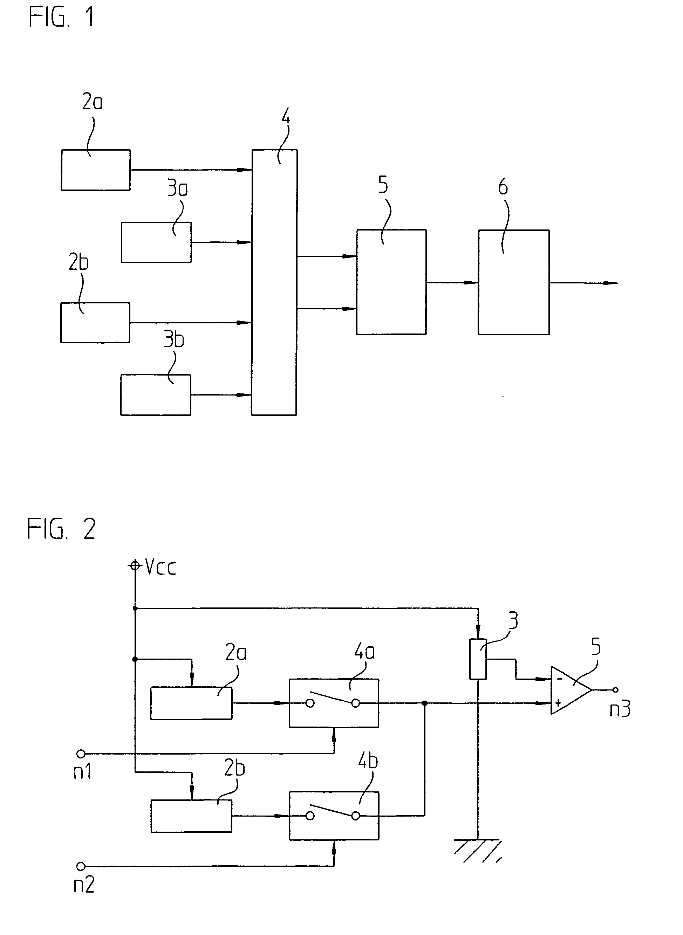

The encoder signal processing circuit of the present invention comprises, for example, as shown in Figure 1, multiple detectors 2a and 2b, which generate signals with different phases, a switching circuit 4, which alternatively selects and outputs a signal from these multiple detectors 2a and 2b, and a waveform shaping circuit 5 that shapes waveforms of output signals from the detectors 2a and 2b that are switched by the switching circuit. Preferably, it also comprises a direction determining/counting unit 6 that monitors output signals from the waveform shaping circuit 5 in relation to the operation of the switching circuit 4 and determines the direction of movement and computes the amount of movement.

Providing a switching circuit 4 that alternatively selects and outputs signals from the detectors 2a and 2b in this way enables waveform shaping processing of output signals from multiple detectors by a single waveform shaping circuit 5, enabling device simplification, lower cost, and reduced energy consumption through reduction in the number of waveform shaping circuits. In addition, output signals from multiple detectors that are processed in this way by a single waveform shaping circuit 5 can be processed without encountering problems by providing a direction determining/counting part 6 that monitors output signals from the waveform shaping circuit 5 in relation to the operation of the switching circuit 4 and determines the direction of movement and computes the amount of movement.

Herein, Figure 1 is a block diagram showing the basic constitution of an encoder signal processing circuit of the present invention. To further describe Figure 1, the example of a signal processing circuit that is illustrated has, as multiple detectors, both detector A 2a and detector B 2b, which generate two signals with different phases, based on a code pattern that is arranged on a code disc that is not shown in this example. Detector A 2a and detector B 2b also each have, respectively, a reference signal A generating part 3a and a reference signal B generating part 3b that generate reference signals.

The output signals that are outputted from the detectors 2a, 2b and the reference signals from the reference signal generating parts 3a, 3b are inputted to the switching circuit 4. The switching circuit 4 switches either the output signal from the detector A 2a and the reference signal from the reference signal A generating part 3a, or the output signal from the detector B 2b and the reference signal from the reference signal B generating part 3b to the waveform shaping circuit 5. In the waveform shaping circuit 5 the selected output signal from the detector A 2a or detector B 2b is binarized at level H or L, by using the selected reference signal from reference signal A generating part 3a or reference signal B generating part 3b as threshold level. Thus, the waveforms are shaped into digital signals, that is, rectangular pulse signals. In this example, two reference signal generating parts 3a, 3b were arranged, corresponding to detector A 2a and detector B 2b, for phase A and phase B, but the reference signal from a single reference signal generating part may also used in common. In this case it is not necessary to switch the reference signals from reference signal generating parts 3a, 3b in the switching circuit 4, too.

The output signals from the detector A 2a and the detector B 2b, the waveforms of which are shaped in the waveform shaping circuit 5, are, moreover, inputted to a direction determining/counting part 6, and processed. The signal outputted from the waveform shaping circuit 5 is a signal wherein the output signals from multiple detectors A 2a and B 2b are combined. However, if this output signal is detected in relation to the operation of the switching circuit 4, it can be detected as the output signal of the detector A 2a at the time of switching to phase A, and it can be detected as the output signal of the detector B 2b at the time of switching to phase B. That is, the type of signal presently switched to can be ascertained by controlling the switching operation. Movement can be determined, and the amount of movement can be computed as a predetermined counted value, by evaluating and determining the phase relationship of these phase A and phase B signals.

Hence multiple detectors can be supported even by a single waveform shaping circuit, by providing a switching circuit and a direction determining/counting part that determines direction by detecting signals related to this switching circuit. It is therefore unnecessary to provide redundant waveform shaping circuits that duplicate functions. Reliability can be improved through circuit simplification, the number of parts can be reduced, devices made smaller, costs lowered, and energy conserved.

Figure 2 is a block diagram showing a first embodiment of the encoder signal processing circuit of the present invention. The signal processing circuit illustrated in this example comprises two detectors 2a and 2b, and two analog switches 4a and 4b constituting a switching circuit. The output terminal of the detector A 2a is connected to one terminal of the analog switch 4a, and the output terminal of the detector B 2b is connected to one terminal of the analog switch 4b. The other terminals of the analog switches 4a and 4b are connected to one input terminal (+) of a differential input IC of a comparator or the like, constituting a waveform shaping circuit 5.

The midpoint of the reference signal generating part 3 is connected to the other input terminal (-) of the differential input IC of the comparator or the like. One of the two terminals of the reference signal generating part 3 is connected to the power source Vcc, and the other terminal is grounded. That is, the power source Vcc voltage is divided, and the reference signal of the predetermined reference voltage is inputted to the other input terminal (-) of the differential input IC from the reference signal generating part 3.

The reference signal generating part 3 in this example is constituted such that the power source voltage is divided by an element having an impedance component, such as a resistor, but rather than being restricted to such constitutions, which are capable of generating a stable predetermined voltage, semiconductor properties may also be employed, as in a Zener diode, FET (field effect transistor), or the like. This example also differs from the example in Figure 1 in that only a single reference signal generating part 3 is used, and a single reference signal can be shared by phase A and phase B. Therefore, the reference signal from the reference signal generating part 3 can be inputted to the waveform shaping circuit 5 without passing through a switching circuit.

The two detectors 2a and 2b are also connected to power source Vcc, and supplied therefrom. The terminal n1, to which switching signal A is inputted, is connected to the control terminal of the analog switch 4a, and the terminal n2 to which switching signal B is inputted is connected to the control terminal of the analog switch 4b. When switching signal A is inputted, the analog switch 4a becomes conductive, and the output signal from the detector A 2a is supplied to the waveform shaping circuit 5. On the other hand, when switching signal B is inputted, the analog switch 4b becomes conductive, and the output signal from the detector B 2b is supplied to the waveform shaping circuit 5. Hence, signals from either the detector A 2a or the detector B 2b are inputted alternatively to the waveform shaping circuit 5, depending on whether switching signal A or switching signal B is inputted. The waveforms are shaped in accordance with the reference signal from the reference signal generating part 3, and outputted to the terminal n3.

Note that optical sensors, magnetic sensors, or the like are used as detector A 2a and detector B 2b, requiring an electrical power source, as in the example illustrated. Output signals are generated in accordance with the optical information or magnetic information that is detected at the output terminal. In the example illustrated, the mechanical contact symbol is used for the analog switches 4a, 4b, as in a relay or the like, but a switching element comprising a semiconductor is also acceptable.

The output signal from the waveform shaping circuit 5 can be processed by a procedure similar to that described above. A detailed example of this constitution is described below. Other constituent elements of encoders are omitted from the specification of the present invention. Descriptions in the publication cited above, for example, as well as in plentiful other reference literature, may be consulted as necessary.

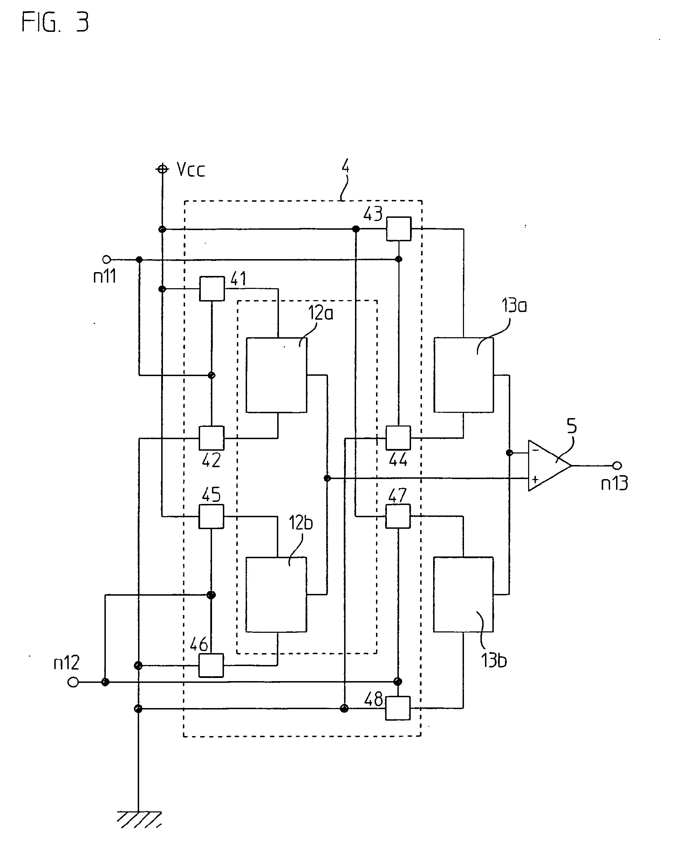

Figure 3 is a block diagram showing a second embodiment of the encoder signal processing circuit of the present invention. In this example, instead of the output signals from the two detectors 12a and 12b being switched, detectors 12a and 12b, which generate output, are switched by switching the power source of these detectors 12a and 12b. The reference signals of the two reference signal generating parts 13a and 13b are also switched in a similar way.

That is, the output terminals of the two detectors 12a and 12b are connected to one input terminal (+) of a differential input IC of a comparator or the like, constituting a waveform shaping circuit 5. The output terminals of both the reference signal A generating part 13a and the reference signal B generating part 13b are connected to the other input terminal (-) of the differential input IC that constitutes a waveform shaping circuit 5.

One terminal on the power source side of the detector A 12a and the reference signal A generating part 13a, and of the detector B 12b and the reference signal B generating part 13b, is connected to the power source Vcc via switching element 41, 43, 45, or 47, and the other terminal on the ground side of each is connected via switching element 42, 44, 46, or 48. Herein, switching elements 41-48 may be either elements as in a relay, having mechanical contacts, or semiconductor switches having conductive/non-conductive states, or logic elements having conductive/high-impedance states, or the like. Among these, the one that optimally fulfills the requirements may be employed.

The terminal n11, to which the switching signal A is inputted, is connected to the control terminals of the switching elements 41, 42, 43, and 44 on the phase A side, and terminal n12, to which the switching signal B is inputted, is connected to the control terminals of the switching elements 45, 46, 47, and 48. Thus, when switching signal A is inputted to the terminal n11, the switching elements 41, 42, 43, and 44 on the phase A side become conductive, and an electrical circuit of the electrical source Vcc → the switching element 41 → the detector A 12a → the switching element 42 → ground is formed. Detector A 12a operates, and an output signal appears at the output terminal thereof. Similarly, an electrical circuit of the electrical source Vcc → the switching element 43 → the reference signal A generating part 13a → the switching element 44 → ground is formed; reference signal A appears at the output terminal of the reference signal A generating part 13a.

Since the switching elements 45, 46, 47, and 48 on the phase B side are in an inhibited state, the detector B 12b and the reference signal B generating part 13b do not operate, so that neither the output signal nor the reference signal B is outputted. As a result, only the output signal of the detector A 12a and the reference signal A of the reference signal A generating part 13a on the phase A side are inputted to the waveform shaping circuit 5.

Similarly, when switching signal B is inputted to the terminal n12, the switching elements 45, 46, 47, and 48 on the phase B side become conductive, and the switching elements 41, 42, 43, and 44 on the phase A side are in an inhibited state. Therefore, only the output signal of the detector B 12b and the reference signal B of the reference signal B generating part 13b on the phase B side are inputted to the waveform shaping circuit 5. The phase B signal, which has been waveform-shaped with the reference signal B as a reference value, is then output to the terminal n13. Thus, the output signals from the multiple detectors 12a and 12b that are inputted to the waveform shaping circuit 5 and the reference signals from the reference signal generating parts 13a and 13b can be selected by controlling the power source that supplies the detectors and the reference signal generating parts with a switching circuit.

The output signal from the waveform shaping circuit can be processed according to a method similar to that described above. A detailed example of this constitution is described below.

The following is a detailed explanation of an example of the constitution of the direction determining and counting part 6. Note that since the characteristic parts of the direction determining and counting part 6 in this example mainly comprise algorithms that are expressed in software, detailed descriptions of the ordinary circuits and elements that activate such software are omitted.

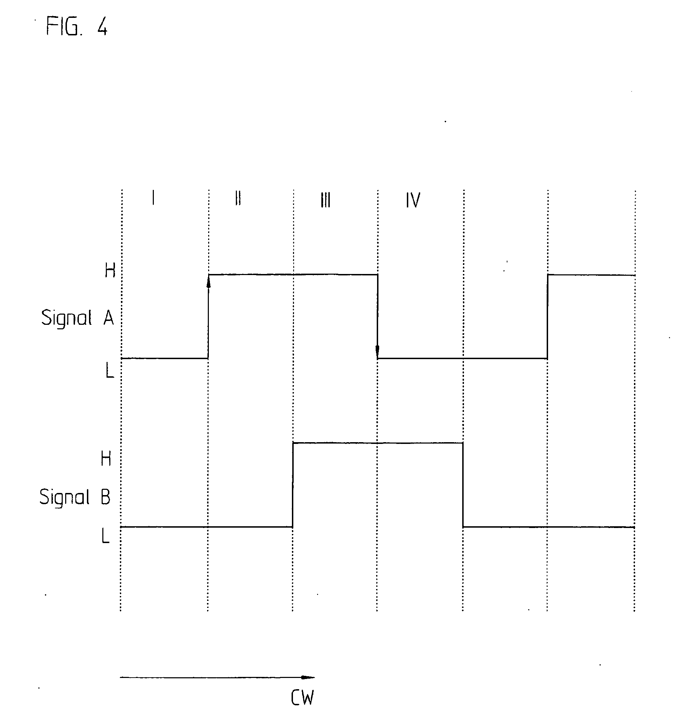

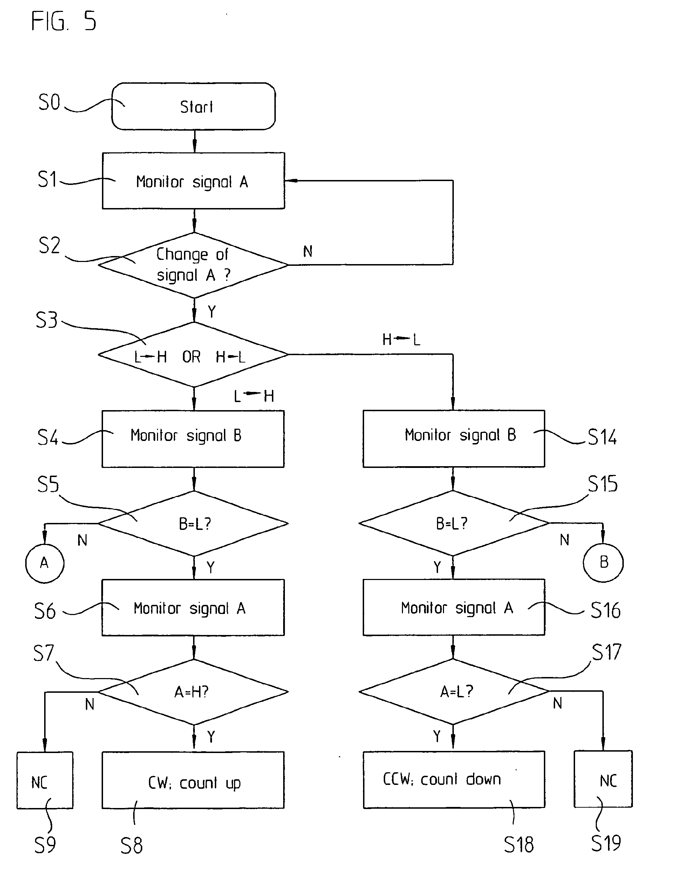

Figure 4 is a timing chart of waveform shaped signals from detector elements that have been outputted from a waveform shaping circuit, that is, of signal A and signal B, which are two signals differing in phase from phase A and phase B. Figures 5 and 6 are flowcharts showing the operation of the direction determining and counting part 6.

First, in initial state S0, the direction determining and counting part monitors in step S1 a signal in phase A or B, for example, signal A on the phase A side. Accordingly, the switching circuit operates at this time such that the output signal is transmitted from the detector element on the phase A side.

Changes in the signal level that is detected are monitored in step S2. If there is no change, monitoring continues, and if the level does change, the point of change is detected. The point of change may be detected by various well-known techniques. For example, signals may be sampled at regular intervals of time, the signal level data stored, and previous data compared to recent data (or present data); if there is a change in signal level, that interval is then determined to be the point of change.

If a signal point of change is detected, the nature of the change, that is, whether the change has been from L level to H level, or from H level to L level, is determined in step S3, based on the levels before and after the change.

If there is a change from L to H, the switching circuit 4 switches to the phase B side, assuming that the signal changes from area (I) to (II) in Figure 4, and the level of the signal B is monitored on the phase B side in step S4. In step S5, the level of signal B is checked. If the signal B level is L level, taking the present status to be that of area (II) in Figure 4, the signal switching circuit 4 once again switches to the phase A side in step S6, and the level of signal A is checked again in step S7. If the signal A is H level, the shift in status to that of area (II) is confirmed, in step S8 it is determined that movement was in a CW (clockwise) direction, and counting is upward. If the code disc shakes during the time that signal A is at level L, counting does not proceed, since there is a possibility of noise or some other malfunction (step 9).

If, in the aforementioned step S3, there is a change from H to L, the switching circuit 4 switches to the phase B side, assuming that the signal changes from area (II) to (I) in Figure 4, and in step S14 the level of the signal B is monitored on the phase B side. In step S15, the level of signal B is checked. If the signal B level is L level, taking the present status to be that of area (I) in Figure 4, the signal switching circuit 4 once again switches to the phase A side in step S16, and the level of signal A is checked again in step S17. If the signal A is L level, the shift in status to that of area (I) is confirmed. In step S18 it is determined that movement was in a CCW (counterclockwise) direction, and counting is downward. If the code disc shakes during the time that signal A is at level H, counting does not proceed, since there is a possibility of noise or some other malfunction (step S19).

If the level of signal B is level H in the aforementioned step S5, assuming that it shifts to flow (A) which is shown in Figure 6, and that the signal changes from area (IV) to (III) in Figure 4, and taking the present status to be that of area (III) in Figure 4, the signal switching circuit 4 once again switches to the phase A side in step S26, and the level of signal A is confirmed in step S27. If the signal A is H level, the shift in status to that of area (III) is confirmed and in step S28 it is determined that movement was in a CCW direction, and counting is downward. If the code disc shakes during the time that signal A is at level L, counting does not proceed, since there is a possibility of noise or some other malfunction (step S29).

If the level of signal B is level H in the aforementioned step S15, assuming that it shifts to flow (B), which is also shown in Figure 6, and that the signal changes from area (III) to (IV) in Figure 4, and taking the present status to be that of area (IV) in Figure 4, the signal switching circuit 4 once again switches to the phase A side in step S36, and the level of signal A is confirmed in step S37. If the signal A is L level, the shift in status to that of area (IV) is confirmed and in step S38 it is determined that movement was in a CW direction, and counting is downward. If the code disc shakes during the time that signal A is at level H, counting does not proceed, since there is a possibility of noise or some other malfunction (step S39).

In this way, it is determined whether the signal that is switched by the switching circuit 4 is signal A from the phase A side or signal B from the phase B side, and the levels of both signals can be readily ascertained by switching as necessary to enable detection of the signal on the side requiring confirmation. Based on the phase A and phase B signal levels, as well as the point of change thereof, the phase relationship between the two can be ascertained. Whether rotation is clockwise (CW) or counterclockwise (CCW) is determined, and directional movement quantity is computed by counting up in the case of clockwise rotation, and counting down in the case of counterclockwise rotation.

In this example, the point of change is detected by monitoring the signal on the phase A side in the initial state, but the point of change can also be detected by monitoring the phase B side. Both phase A and phase B may also be monitored by switching the signals at a speed that enables detection of the point of change. And while two signals with different phases were used to determine the CW/CCW rotational direction in the present example, the direction of movement and the like can also be determined on a plane surface combining the direction of linear movement with these rotational directions, if the movement direction can be determined from the phase difference of the signals, and the amount of movement can also be computed.

A device for embodying the foregoing algorithm can be readily embodied using an ordinarily used computer system, combining a multipurpose or dedicated processor and peripheral elements thereof, and also using the programming language that is optimal for these. In particular, a direction determining and counting part can be readily constituted, without increasing the number of parts, by appropriating control elements of dedicated processors and the like that are already in use for use as an encoder control device.

As noted above, the ability to eliminate the waveform shaping circuit by using a switching circuit, and to readily constitute a direction determining/counting part, can contribute greatly to reduction in the number of encoder parts, as well as to smaller size, and energy conservation.

## Claims

1. An encoder signal processing circuit comprising a plurality of detectors (2a, 2b; 12a, 12b) that generate signals with different phases, a switching circuit (4) that alternatively selects and outputs a signal from this plurality of detectors (2a, 2b; 12a, 12b), and a waveform shaping circuit (5), **characterized in that** the waveform shaping circuit (5) shapes waveforms of output signals from the detectors (2a, 2b; 12a, 12b) that are selected by this switching circuit (4) into digital signals.

2. The encoder signal processing circuit according to Claim 1, further comprising at least one reference signal generating part (3; 3a, 3b; 13a, 13b) that generates at least one reference signal that is used by the waveform shaping circuit (5) as a threshold level.

3. The encoder signal processing circuit according to Claim 2, wherein the at least one reference signal, generated by the at least one reference signal generating part (3; 3a, 3b; 13a, 13b) is directly outputted to the waveform shaping circuit (5).

4. The encoder signal processing circuit according to Claim 2, wherein the at least one reference signal, generated by the at least one reference signal generating part (3; 3a, 3b; 13a, 13b) is outputted to the switching circuit (4) and the switching circuit (4) selects and outputs at least one reference signal to the waveform shaping circuit (5).

5. The encoder signal processing circuit according to any preceding claim, further comprising a direction determining/counting unit (6) that monitors output signals from the waveform shaping circuit (5) in relation to the operation of said switching circuit (4), determines the direction of movement and computes the amount of movement.

6. The encoder signal processing circuit according to Claim 5, wherein the direction determining/counting unit (6) is embodied in a processor.

7. The encoder signal processing circuit according to any preceding claim, wherein the switching circuit (4) comprises switching elements (41, 42, 43, 44, 45, 46, 47, 48) and a signal of the plurality of detectors (2a, 2b; 12a, 12b) is selected and outputted by switching the power source of the detectors (2a, 2b; 12a, 12b) by using the switching elements (41, 42, 43, 44, 45, 46, 47, 48).

8. The encoder signal processing circuit according to Claim 7, wherein at least one reference signal, generated by the at least one reference signal generating part (3; 3a, 3b; 13a, 13b) is selected and outputted by switching the power source of the at least one reference signal generating part (3; 3a, 3b; 13a, 13b) by using the switching elements (41, 42, 43, 44, 45, 46, 47, 48).

## Patentansprüche

1. Codierersignalverarbeitungsschaltung, umfassend mehrere Detektoren (2a, 2b; 12a, 12b), die Signale mit unterschiedlichen Phasen erzeugen, eine Umschaltschaltung (4), die alternativ ein Signal von diesen mehreren Detektoren (2a, 2b; 12a, 12b) wählt und ausgibt, und eine Wellenform-Formungsschaltung (5) **dadurch gekennzeichnet, dass** die Wellenform-Formungsschaltung (5) Wellenformen von Ausgangssignalen von den Detektoren (2a, 2b; 12a, 12b), die durch diese Umschaltschaltung (4) gewählt werden, zu digitalen Signalen formt.

2. Codierersignalverarbeitungsschaltung nach Anspruch 1, ferner umfassend zumindest einen Bezugssignalerzeugungsabschnitt (3; 3a, 3b; 13a, 13b), der zumindest ein Bezugssignal erzeugt, das durch die Wellenform-Formungsschaltung (5) als Schwellenpegel verwendet wird.

3. Codierersignalverarbeitungsschaltung nach Anspruch 2, wobei das zumindest eine Bezugssignal, das durch den zumindest einen Bezugssignalerzeugungsabschnitt (3; 3a, 3b; 13a, 13b) erzeugt wird, direkt an die Wellenform-Formungsschaltung (5) ausgegeben wird.

4. Codierersignalverarbeitungsschaltung nach Anspruch 2, wobei das zumindest eine Bezugssignal, das durch den zumindest einen Bezugssignalerzeugungsabschnitt (3; 3a, 3b; 13a, 13b) erzeugt wird, an die Umschaltschaltung (4) ausgegeben wird, und die Umschaltschaltung (4) zumindest ein Bezugssignal wählt und an die Wellenform-Formungsschaltung (5) ausgibt.

5. Codierersignalverarbeitungsschaltung nach einem der vorhergehenden Ansprüche, ferner umfassend eine Richtungsbestimmungs/Zähleinheit (6), die Ausgangssignale von der Wellenform-Formungsschaltung (5) in Bezug auf die Tätigkeit der Umschaltschaltung (4) überwacht, die Richtung der Bewegung bestimmt und das Ausmaß der Bewegung berechnet.

6. Codierersignalverarbeitungsschaltung nach Anspruch 5, wobei die Richtungsbestimmungs/Zähleinheit (6) in einem Prozessor enthalten ist.

7. Codierersignalverarbeitungsschaltung nach einem der vorhergehenden Ansprüche, wobei die Umschaltschaltung (4) Umschaltelemente (41, 42, 43, 44, 45, 46, 47, 48) umfasst und ein Signal der mehreren Detektoren (2a, 2b; 12a, 12b) durch Umschalten der Stromquelle der Detektoren (2a, 2b; 12a, 12b) unter Verwendung der Umschaltelemente (41, 42, 43, 44, 45, 46, 47, 48) gewählt und ausgegeben wird.

8. Codierersignalverarbeitungsschaltung nach Anspruch 7, wobei zumindest ein Bezugssignal, das durch den zumindest einen Bezugssignalerzeugungsabschnitt (3; 3a, 3b; 13a, 13b) erzeugt wird, durch Umschalten der Stromquelle des zumindest einen Bezugssignalerzeugungsabschnitts (3; 13a, 13b; 13a, 13b) unter Verwendung der Umschaltelemente (41, 42, 43, 44, 45, 46, 47, 48) gewählt und ausgegeben wird.

## Revendications

1. Circuit de traitement de signal de codeur, comprenant une pluralité de détecteurs (2a, 2b ; 12a, 12b) générant des signaux avec différentes phases, un circuit de commutation (4) sélectionnant et émettant alternativement un signal de cette pluralité de détecteurs (2a, 2b ; 12a, 12b), et un circuit de mise en forme de forme d'onde (5), **caractérisé en ce que** le circuit de mise en forme de forme d'onde (5) transforme des formes d'onde des signaux de sortie des détecteurs (2a, 2b ; 12a, 12b) qui sont sélectionnés par ce circuit de commutation (4) en signaux numériques.

2. Circuit de traitement de signal de codeur selon la revendication 1, comprenant en outre au moins une section de génération de signal de référence (3 ; 3a, 3b ; 13a, 13b) générant au moins un signal de référence, utilisé par le circuit de mise en forme de forme d'onde (5) comme niveau de seuil.

3. Circuit de traitement de signal de codeur selon la revendication 2, dans lequel le au moins un signal de référence, généré par la au moins une section de génération de signal de référence (3 ; 3a, 3b ; 13a, 13b) est directement transmis au circuit de mise en forme de forme d'onde (5).

4. Circuit de traitement de signal de codeur selon la revendication 2, dans lequel le au moins un signal de référence, généré par la au moins une section de génération de signal de référence (3 ; 3a, 3b ; 13a, 13b) est transmis au circuit de commutation (4), et le circuit de commutation (4) sélectionne et transmet au moins un signal de référence au circuit de mise en forme de forme d'onde (5).

5. Circuit de traitement de signal de codeur selon l'une quelconque des revendications précédentes, comprenant en outre une unité de comptage/détermination de direction (6), qui contrôle les signaux de sortie venant du circuit de mise en forme de forme d'onde (5) en rapport avec le fonctionnement dudit circuit de commutation (4), détermine la direction du mouvement et calcule la quantité de mouvement.

6. Circuit de traitement de signal de codeur selon la revendication 5, dans lequel l'unité de comptage/détermination de direction (6) est incorporée à un processeur.

7. Circuit de traitement de signal de codeur selon l'une quelconque des revendications précédentes, dans lequel le circuit de commutation (4) comprend des éléments de commutation (41, 42, 43, 44, 45, 46, 47, 48), et un signal de la pluralité de détecteurs (2a, 2b ; 12a, 12b) est sélectionné et émis par une commutation du bloc d'alimentation des détecteurs (2a, 2b ; 12a, 12b) au moyen des éléments de commutation (41, 42, 43, 44, 45, 46, 47, 48).

8. Circuit de traitement de signal de codeur selon la revendication 7, dans lequel au moins un signal de référence, généré par la au moins une section de génération de signal de référence (3 ; 3a, 3b ; 13a, 13b), est sélectionné et émis par une commutation du bloc d'alimentation de la au moins une section de génération de signal de référence (3 ; 3a, 3b ; 13a, 13b), au moyen des éléments de commutation (41, 42, 43, 44, 45, 46, 47, 48).
